# FASCICULE DE BREVET EUROPEEN

(11) **EP 4 499 503 B1**
(45) Date de publication et mention de la délivrance du brevet: **24.06.2026**
(21) Numéro de dépôt: 23719048.3
(22) Date de dépôt: 28.03.2023
(51) Int. Cl.: B64C 27/32, B64D 15/12, H01F 38/18, H05B 1/02

(54) **UNITE INTEGREE DE TRANSFERT DE PUISSANCE TOURNANT D'UNE CHAINE ELECTRIQUE DE DEGIVRAGE DES PALES D'HELICE ET DU CONE AVANT D'UNE TURBOMACHINE**
INTEGRIERTE EINHEIT ZUR ÜBERTRAGUNG VON ROTATIONSENERGIE VON EINER ELEKTRISCHEN KETTE ZUR ENTEISUNG VON PROPELLERSCHAUFELN UND DES NASENKONUS EINER TURBOMASCHINE
INTEGRATED UNIT FOR TRANSFERRING ROTARY POWER FROM AN ELECTRICAL CHAIN FOR DE-ICING PROPELLER BLADES AND THE NOSE CONE OF A TURBOMACHINE

(30) Priorité: 31.03.2022 FR 2202967
(43) Date de publication de la demande: 05.02.2025
(73) Titulaire: Safran Electrical & Power, 31702 Blagnac (FR)
(72) Inventeur: HADJIDJ, Djemouai, 77550 MOISSY-CRAMAYEL (FR)
(74) Mandataire: Cabinet Beau de Loménie
(86) Numéro de dépôt international: PCT/FR2023/050443
(87) Numéro de publication internationale: WO 2023/187292

(56) Documents cités:
- US-A1- 2011 290 942
- US-A1- 2013 307 378
- US-A1- 2015 108 760

## Description

### Domaine Technique

La présente invention se rapporte au domaine général du dégivrage des pales d'hélice et du cône avant d'une turbomachine, et plus particulièrement à la chaîne électrique de dégivrage et au transfert de puissance entre la partie fixe et la partie tournante de la turbomachine.

### Technique antérieure

Les turbomachines comprennent, en partant de l'amont, un ou plusieurs modules de compresseur disposés en série, qui compriment de l'air aspiré dans une entrée d'air. L'air est ensuite introduit dans une chambre de combustion où il est mélangé à un carburant et brûlé. Les gaz de combustion passent à travers un ou plusieurs modules de turbine qui entraînent le ou les compresseurs. Les gaz sont ensuite éjectés soit dans une tuyère pour produire une force de propulsion, soit sur une turbine libre pour produire de la puissance qui est récupérée sur un arbre de transmission.

Les turboréacteurs double flux actuels à fort taux de dilution, ou turbofans, comportent un rotor de soufflante et plusieurs étages de compresseur, notamment un compresseur basse pression, et un compresseur haute pression qui appartiennent au corps primaire du moteur. En amont du compresseur basse pression est disposée une roue d'aubes mobiles de grande dimension, ou soufflante, qui alimente à la fois une veine primaire en flux primaire traversant les compresseurs basse pression et haute pression et une veine secondaire en flux froid, ou flux secondaire, qui est dirigé directement vers une tuyère de flux froid, dite tuyère secondaire. La soufflante est entraînée par l'arbre de rotation du corps basse pression.

La protection contre le givre des pales d'hélice de la soufflante et du cône avant d'une turbomachine est basée sur un dégivrage électrothermique. Des tapis chauffants composés d'un réseau de résistances sont intégrés aux bords d'attaque des hélices et du cône avant. En présence de conditions givrantes, une couche de givre est laissée volontairement se former sur les bords d'attaque. Puis, les résistances des tapis chauffants sont alimentées pendant une durée définie pour chauffer la surface des hélices et du cône afin de décrocher les couches de givre formées. Avec la rotation des pales et du cône avant, ces couches de givre sont éjectées par effet de la force centrifuge.

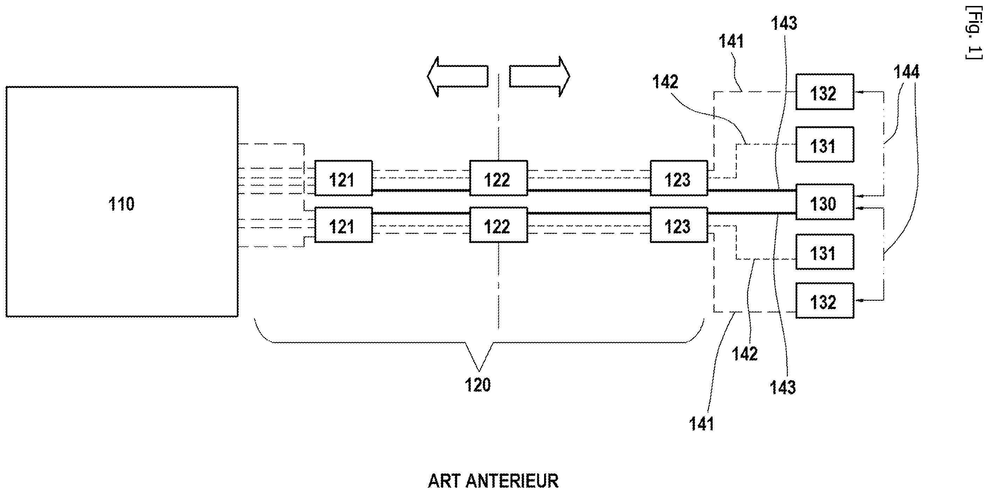

Les surfaces à dégivrer de la turbomachine sont importantes et nécessitent donc beaucoup de puissance électrique pour alimenter les résistances des tapis chauffants, la puissance dédiée au dégivrage provenant des générateurs de l'avion. La figure 1 représente un circuit électrique 120 d'un système de dégivrage selon l'art antérieur connecté aux résistances 110 des tapis chauffants et aux alimentations électriques 131, 132 et au système de contrôle 130 de la turbomachine. Le circuit électrique 120 comprend des convertisseurs de tension continue en tension alternative 123 qui permettent d'alimenter en tension alternative des transformateurs-tournants 122. Afin de limiter la puissance fournie au système de dégivrage et aux autres systèmes non-propulsifs, on alimente les résistances 110 d'une paire de pales d'hélice seulement pendant un temps donné, puis on alimente les résistances de la paire suivante et ainsi de suite, une paire étant formée d'une pale et de son opposée, le tout étant connecté en série avec un secteur du cône avant. L'alternance d'alimentation des résistances 110 des paires de pales est réalisée grâce aux commutateurs 121 placés entre les résistances 110 et les transformateurs-tournants 122.

Pour faire fonctionner le circuit électrique 120 du système de dégivrage, des servitudes sont nécessaires, comme par exemple des servitudes pour l'alimentation électrique continue basse tension 142, pour l'alimentation électrique continue haute tension 141 et pour les liaisons de communication 143 entre les éléments 121, 122, 123 du circuit électrique 120 et le système de contrôle 130 de la turbomachine. Cela nécessite d'acheminer de nombreux harnais 141, 142, 143 dans la turbomachine tout en respectant certaines contraintes d'installation, comme des contraintes sur les rayons de courbure des harnais ou sur la distanciation entre les harnais et/ou entre les composants de la turbomachine. Ces contraintes entrainent une augmentation de la masse et du volume de la turbomachine, ainsi qu'une installation et une maintenance complexes du système de dégivrage.

Les documents US2013307378 A1, US2011290942 A1 et US2015108760 A1 décrivent des systèmes électriques de dégivrage connus dans l'état de la technique.

Il est donc souhaitable de disposer d'un système électrique de dégivrage répondant aux contraintes d'installation tout en réduisant la masse, le volume et la complexité d'intégration du système de dégivrage.

### Exposé de l'invention

L'invention concerne une unité intégrée de transfert de puissance tournant d'un circuit électrique de dégivrage de pales d'hélice et de cône avant d'une turbomachine comprenant :
- un transformateur-tournant comprenant une partie statique et une partie tournante ;
- un convertisseur de tension continue en tension alternative connecté à sa sortie à la partie statique du transformateur-tournant et destiné à être connecté à son entrée à une alimentation électrique continue, et
- un commutateur de puissance connecté au transformateur-tournant et configuré pour transmettre une puissance électrique à au moins une paire de pales d'hélice et au cône avant de la turbomachine.

L'invention permet ainsi de regrouper au sein d'un même équipement, le transformateur-tournant, le commutateur et le convertisseur pour former une unité intégrée de transfert de puissance tournant. Autrement dit, ils sont présents localement à un même endroit dans la turbomachine. L'unité intégrée est ainsi plus compacte et peut être installée dans la turbomachine dans une zone de faible diamètre présentant limitant ainsi les forces d'accélération centrifuges très stressantes et nuisibles pour les composants électroniques.

Le fait d'intégrer tous les composants au sein d'un même équipement permet de réduire, voire supprimer de nombreux et longs câbles et harnais entre les équipements du système de dégivrage ainsi qu'une réduction du nombre et de la taille du filtrage des perturbations électromagnétiques (filtre EMI ou CEM). On peut ainsi réduire la masse et le volume du système électrique de dégivrage.

De plus, grâce à l'unité intégrée, on peut également mutualiser les ressources, comme le refroidissement et l'alimentation électrique basse tension entre ces trois composants. Cela permet également d'offrir une flexibilité sur l'orientation des connecteurs (orientation axiale ou circulation par exemple) pour faciliter l'acheminement des harnais de puissance depuis l'unité vers les pieds de pales ou le cône avant.

Enfin, l'unité intégrée offre une souplesse sur le choix de conception et d'agencement des composants au sein de l'unité pour, par exemple, faciliter la maintenance, améliorer l'efficacité du refroidissement ou les interconnexions entre les composants.

Selon une caractéristique particulière de l'invention, l'unité intégrée comprend une première voie électrique comprenant le transformateur-tournant, le convertisseur et le commutateur, et une deuxième voie comprenant un deuxième transformateur-tournant comprenant une partie statique et une partie tournante, un deuxième convertisseur de tension continue en tension alternative et un deuxième commutateur de puissance, le deuxième convertisseur étant connecté à sa sortie à la partie statique du deuxième transformateur-tournant et destiné à être connecté à une alimentation électrique continue et le deuxième commutateur étant connecté au deuxième transformateur-tournant et configuré pour transmettre une puissance électrique à au moins une paire de pales d'hélice et au cône avant de la turbomachine.

Le fait d'avoir deux voies électriques redondantes permet d'avoir toujours un système de dégivrage fonctionnel même en cas de panne d'une des voies.

Selon une autre caractéristique particulière de l'invention, l'unité intégrée comprend au moins un convertisseur de tension continue en tension continue associé au convertisseur de tension continue en tension alternative et connecté à l'alimentation électrique continue du convertisseur de tension continue en tension alternative associé et configuré pour générer une alimentation électrique basse tension.

La présence d'un convertisseur de tension continue en tension continue (ou convertisseur DC/DC) permet de générer une tension bas niveau locale (par exemple une tension continue de 28 V), c'est-à-dire au sein de l'unité intégrée. Cela permet, pour chaque voie électrique, de connecter l'unité intégrée à une seule alimentation électrique externe haute tension et de réduire le nombre de câbles entre l'unité et son environnement.

Selon une autre caractéristique particulière de l'invention, l'unité intégrée comprend une pluralité de transformateurs-tournants dans chaque voie électrique, et au sein de chaque voie électrique, chaque transformateur-tournant est associé à une paire de pales d'hélice distincte, le convertisseur de tension continue en tension alternative est commun aux transformateurs-tournants de la voie électrique et le commutateur comprend des interrupteurs configurés pour sélectionner un des transformateurs-tournants de la voie électrique.

Grâce à cette caractéristique, chaque transformateur-tournant n'est alimenté que pendant le temps d'activation de la paire de pale d'hélice correspondante. Cela permet de pouvoir insérer l'électronique du commutateur entre le convertisseur DC/AC et les transformateurs-tournants et de positionner ainsi le commutateur sur la partie statique de l'unité intégrée supprimant de ce fait le stress de centrifugation sur l'électronique.

Selon une autre caractéristique particulière de l'invention, dans chaque voie électrique, le transformateur-tournant et le commutateur de puissance sont combinés.

Cela permet de n'avoir qu'un seul transformateur-tournant dans chaque voie électrique capable d'alimenter toutes les paires de pales d'hélices, le transformateur-tournant comprenant au moins autant de sorties que de paires de pales. De plus, on peut également positionner l'électronique du commutateur sur la partie statique du transformateur-tournant.

Un autre objet de l'invention est une turbomachine comprenant une unité intégrée de transfert de puissance tournant selon l'invention et un réducteur de vitesse basse pression, l'unité intégrée étant solidaire du réducteur de vitesse basse pression.

Le réducteur de vitesse basse pression, également appelé en anglais Reduction Gear Box, RGB, est interposé entre la soufflante qui comprend les pales d'hélices et l'arbre basse pression de la turbomachine.

Il permet d'entraîner les pales d'hélice de la soufflante de la turbomachine et d'avoir une vitesse de rotation des pales inférieure à celle de l'arbre basse pression. Cette réduction de vitesse permet d'augmenter la taille de la soufflante.

Le fait d'avoir l'unité intégrée solidaire du réducteur de vitesse basse pression permet d'avoir un système de dégivrage proche du réducteur de vitesse et de proposer un système de dégivrage plus compact, plus performant, moins lourd et ayant une maintenance facilitée, car plus accessible.

Selon une caractéristique particulière de l'invention, le réducteur de vitesse basse pression comprend une partie tournante et un arbre fixe, la partie tournante des transformateurs-tournants de l'unité intégrée est solidaire de la partie tournante du réducteur de vitesse basse pression, et la partie statique des transformateurs-tournants, les commutateurs de puissance et les convertisseurs de tension continue en tension alternative de l'unité intégrée sont solidaires de l'arbre fixe du réducteur de vitesse basse pression.

Selon une autre caractéristique particulière de l'invention, le réducteur de vitesse basse pression comprend une partie tournante et un arbre fixe, la partie tournante des transformateurs-tournants et les commutateurs de puissance de l'unité intégrée sont solidaires de la partie tournante du réducteur de vitesse basse pression et la partie statique des transformateurs-tournants et les convertisseurs de tension continue en tension alternative de l'unité intégrée sont solidaires de l'arbre fixe du réducteur de vitesse basse pression.

Ces deux variantes d'assemblage de l'unité intégrée aux parties fixe (arbre fixe) et tournante du réducteur de vitesse basse pression permettent de supprimer les roulements sur l'unité intégrée et d'améliorer ainsi sa fiabilité et sa durée de vie. Elles permettent également de s'affranchir des effets de balourd et de déplacements en étant proche des paliers du réducteur de vitesse, d'avoir un jeu mécanique réduit entre les parties fixe et tournantes de l'unité intégrée pour avoir un gain de masse, notamment au niveau du transformateur-tournant, un gain de volume et de rendement de tout le système électrique de dégivrage, et enfin d'avoir un équipement accessible et remplaçable sous aile sans outils spécifiques pour faciliter les opérations de maintenance, montage et démontage.

Selon une autre caractéristique particulière de l'invention, la turbomachine comprend des ailettes présentes sur une surface externe de l'unité intégrée et solidaires de la partie tournante du réducteur de vitesse basse pression.

Les ailettes permettent de créer un débit d'air forcé autour de l'unité intégrée permettant de refroidir les composants de l'unité intégrée assemblés sur la partie tournante du réducteur de vitesse.

Selon une autre caractéristique particulière de l'invention, la turbomachine comprend une soufflante solidaire de la partie tournante du réducteur de vitesse basse pression.

La soufflante permet de souffler de l'air pour refroidir les composants de l'unité intégrée assemblés sur la partie tournante du réducteur de vitesse. Les composants assemblés sur la partie fixe peuvent également bénéficier de cet air pour leur refroidissement. La soufflante peut avantageusement être combinée aux ailettes pour améliorer le refroidissement de l'unité intégrée.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, un système de dégivrage selon l'art antérieur.
[Fig. 2] La figure 2 représente, de manière schématique et partielle, une unité intégrée d'un système de dégivrage selon un mode de réalisation de l'invention.
[Fig. 3] La figure 3 représente, de manière schématique et partielle, l'assemblage des parties tournantes de l'unité intégrée à un réducteur de vitesse basse pression selon un mode de réalisation de l'invention.
[Fig. 4] La figure 4 représente, de manière schématique et partielle, l'assemblage des parties tournantes de l'unité intégrée à un réducteur de vitesse basse pression selon un autre mode de réalisation de l'invention.
[Fig. 5] La figure 5 représente, de manière schématique et partielle, une unité intégrée et son assemblage à un réducteur de vitesse basse pression selon un autre mode de réalisation de l'invention.

### Description des modes de réalisation

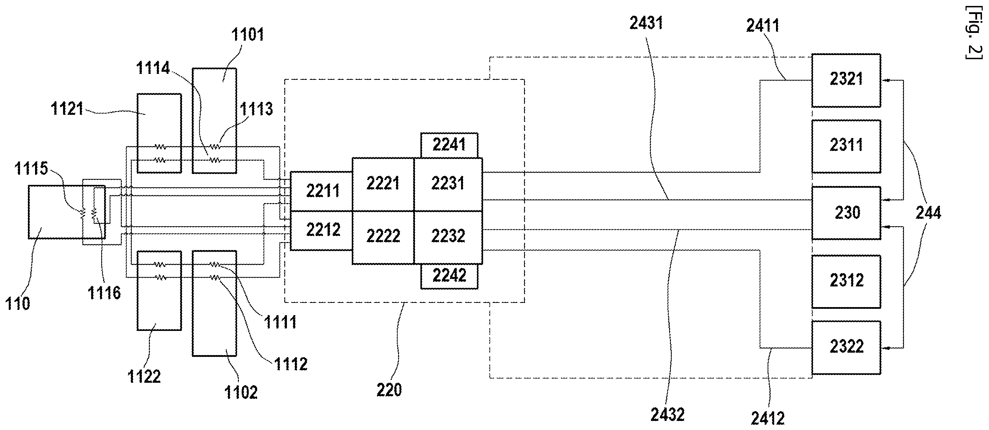

La figure 2 représente de manière schématique et partielle, une unité intégrée 220 de transfert de puissance tournant d'un système de dégivrage selon un mode de réalisation de l'invention. Dans toute la description, une paire de pales d'hélices est formée d'une pale 1101 et de son opposée 1102, la pale et son opposée sont connectées à un secteur 1121, 1122 du cône avant 110 de la turbomachine. De plus, les pales 1101, 1102, les secteurs 1121, 1122 et le cône avant 110 comprennent des tapis chauffants composés d'un réseau de résistances 1111, 1112, 1113, 1114, 1115, 1116 permettant de les dégivrer. Bien que ce ne soit pas représenté sur les figures, les pales d'hélices et le cône avant peuvent également être connectés entre eux en parallèle.

L'unité intégrée 220 du circuit électrique du système de dégivrage comprend deux voies électriques redondantes. La première voie électrique comprend un transformateur-tournant 2221 connecté à un convertisseur 2231 de tension continue en tension alternative (ou convertisseur DC/AC 2231) à son entrée et à un commutateur de puissance 2211 à sa sortie. La deuxième voie électrique comprend également un transformateur-tournant 2222 connecté à un convertisseur 2232 de tension continue en tension alternative (ou convertisseur DC/AC 2232) à son entrée et à un commutateur de puissance 2212 à sa sortie. Chaque transformateur-tournant 2221 et 2222 comprend une partie statique et une partie tournante. Ces deux transformateurs-tournants 2221 et 2222 peuvent être complètement indépendants, ou présenter chacun un bobinage autour d'un même circuit magnétique. Les commutateurs de puissance 2211, 2212 des deux voies sont connectés à au moins une paire de pales 1101, 1102 d'hélice et au cône avant 110 de la turbomachine. Sur cette figure, pour des raisons de clarté, seule une paire de pales est représentée, néanmoins, les commutateurs 2211, 2212 des deux voies peuvent être connectés à toutes les paires de pales d'hélices de la turbomachine. Les convertisseurs DC/AC 2231, 2232 sont chacun connectés en entrée à une alimentation électrique continue haute tension 2321, 2322 et en sortie à la partie statique du transformateur-tournant associé à leur voie électrique. Afin de générer une alimentation électrique basse tension, l'unité intégrée 220 comprend également dans chaque voie électrique, un convertisseur de tension continue en tension continue 2241, 2242 (ou convertisseur DC/DC). Le convertisseur DC/DC 2241 de la première voie est relié en entrée à l'alimentation électrique continue haute tension 2321 et permet de générer une basse tension dans la première voie ; tandis que le convertisseur DC/AC 2242 est relié en entrée à l'alimentation électrique continue haute tension 2322 et permet de générer une basse tension dans la deuxième voie électrique. Les deux convertisseurs DC/DC 2241 et 2242 permettent plus généralement de fournir l'alimentation basse tension de l'électronique de commande de la turbomachine.

L'unité intégrée 220 est également connectée au système de contrôle 230 de la turbomachine. Ainsi, les seules servitudes reliées à l'unité intégrée 220 sont celles de l'alimentation électrique haute tension 2411, 2412 et celles de communication 2431, 2432. Il est néanmoins possible d'avoir une servitude supplémentaire entre l'alimentation électrique basse tension 2311, 2312 et l'unité intégrée 220, si l'unité 220 ne comprend pas de convertisseurs DC/DC.

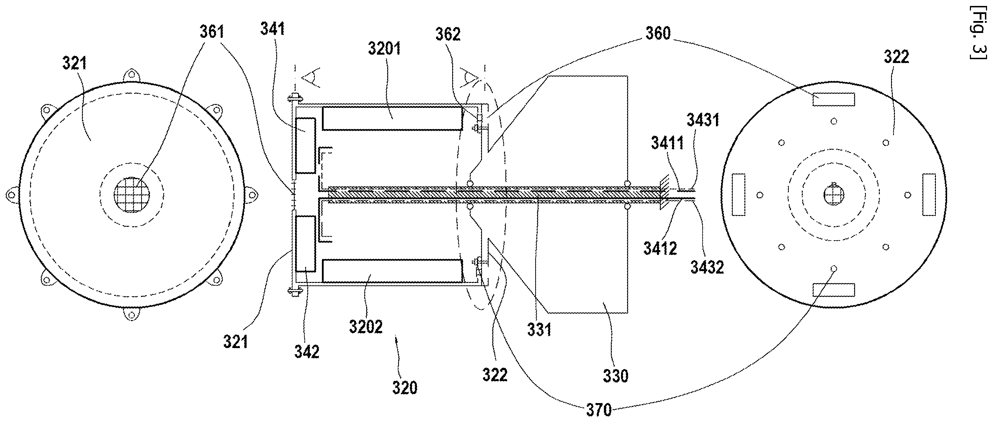

La figure 3 représente de manière schématique et partielle, l'assemblage des parties tournantes 3201, 3202 de l'unité intégrée 320 à un réducteur de vitesse basse pression 330 selon un mode de réalisation de l'invention.

Les composants de l'unité intégrée 320 sont placés dans un carter de forme cylindrique fermé par les flasques 321 et 322. Le carter et ses flasques 321 et 322 sont assemblés au réducteur de vitesse 330. Ainsi, l'unité intégrée 320 est solidaire du réducteur de vitesse 330, en particulier ses parties tournantes 3201, 3202 sont solidaires des parties tournantes du réducteur de vitesse 330. Les flasques 321 et 322 sont fixés au réducteur de vitesse 330 à l'aide, par exemple, de jeux 370 de vis et d'écrou. Les flasques 321 comprennent des grilles d'aération 361, 362 pour pouvoir évacuer l'air chaud de l'unité intégrée 320, les grilles d'aération 362 du flasque 322 étant en regard des grilles d'aération 360 du réducteur de vitesse 330. Plus particulièrement, la grille d'aération 361 du flasque 321 permet de faire pénétrer de l'air froid dans l'unité intégrée 320, tandis que les grilles d'aération 360 du réducteur de vitesse 330 et 362 du flasque 322 permettent d'évacuer l'air chaud de l'unité intégrée 320. Dans ce mode de réalisation, les jeux 370 de vis et d'écrou permettant d'assembler l'unité intégrée 320 au réducteur de vitesse 330 sont placés à l'intérieur de l'unité intégrée 320.

Le réducteur de vitesse 330 comprend un axe fixe 331 à travers lequel on achemine les servitudes 3411, 3412, 3431, 3432 vers l'unité intégrée 320.

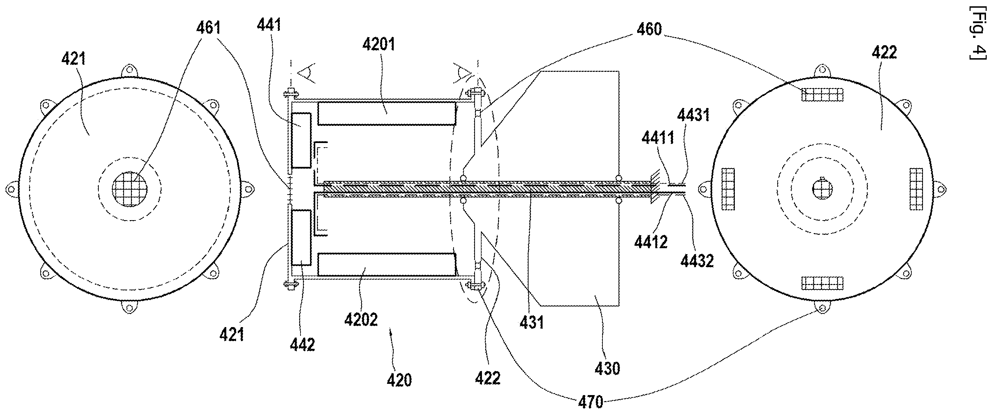

La figure 4 représente de manière schématique et partielle, l'assemblage des parties tournantes 4201, 4202 de l'unité intégrée 420 à un réducteur de vitesse basse pression 430 selon un autre mode de réalisation de l'invention.

Les composants de l'unité intégrée 420 sont placés dans un carter cylindrique fermé par deux flasques 421 et 422. Le carter est assemblé au réducteur de vitesse 430 via ses flasques 421 et 422. Ainsi, l'unité intégrée 420 est solidaire du réducteur de vitesse 430, en particulier ses parties tournantes 4201, 4202 sont solidaires des parties tournantes du réducteur de vitesse 430. Les flasques 421 et 422 sont fixés au réducteur de vitesse 430 à l'aide, par exemple, de jeux 470 de vis et d'écrou. Le flasque 421 comprend une grille d'aération 461 pour pouvoir évacuer l'air chaud de l'unité intégrée 420. Plus particulièrement, la grille d'aération 461 permet de faire permettre de l'air froid dans l'unité intégrée 420. Le réducteur de vitesse 430 comprend toujours des grilles d'aération 460 permettant d'évacuer l'air chaud de l'unité intégrée 420. Dans ce mode de réalisation, les jeux 470 de vis et d'écrou permettant d'assembler l'unité intégrée 420 au réducteur de vitesse 430 sont placés à l'extérieur de l'unité intégrée 420.

Comme précédemment, le réducteur de vitesse 430 comprend un axe fixe 431 à travers lequel on achemine les servitudes 4411, 4412, 4431, 4432 vers l'unité intégrée 420.

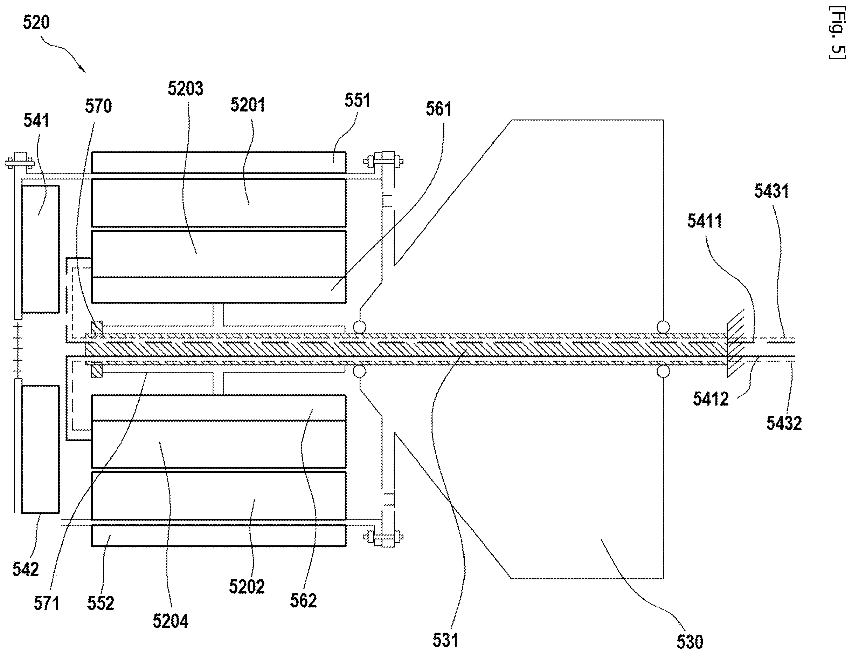

La figure 5 représente de manière schématique et partielle, l'assemblage de l'unité intégrée 520 à un réducteur de vitesse basse pression 530 selon un mode de réalisation de l'invention.

Les parties fixes 5203, 5204 de l'unité intégrée 520 sont solidaires de l'axe fixe 531 du réducteur de vitesse basse pression 530. Plus particulièrement, l'unité intégrée 520 comprend un arbre creux et glissant 571 immobilisé en rotation. Cette immobilisation est par exemple réalisée par une clavette. L'arbre creux 571 permet de faire passer les différentes servitudes de l'unité intégrée 520 via l'axe fixe 531 du réducteur de vitesse 530, comme les alimentations électriques 5411, 5412 et les communications 5431, 5432 avec le système de contrôle de la turbomachine. L'immobilisation en translation de l'arbre creux 571 est par exemple réalisée par un écrou à encoche 570 monté au bout de l'arbre 571.

Les parties tournantes et fixes des figures 3, 4 et 5 comprennent les transformateurs-tournants, les convertisseurs DC/AC, les convertisseurs DC/DC et les commutateurs de puissance des deux voies électriques décrits en figure 2. La partie fixe comprend la partie statique des transformateurs-tournants, les convertisseurs DC/DC et les convertisseurs DC/AC, tandis que la partie tournante comprend la partie tournante des transformateurs-tournants. Les commutateurs de puissance peuvent être dans la partie fixe ou dans la partie tournante. Si les commutateurs sont dans la partie fixe de l'unité intégrée, ils sont généralement placés entre les convertisseurs DC/AC et la partie statique des transformateurs-tournants ; alors que s'ils sont dans la partie tournante de l'unité intégrée, ils sont généralement placés entre la partie tournant des transformateurs-tournants et les résistances des paires de pales d'hélices et du cône avant de la turbomachine. En plaçant les commutateurs dans la partie tournante de l'unité intégrée, on peut libérer du volume pour les convertisseurs DC/AC et/ou rapprocher les sorties de l'unité intégrée vers les résistances des paires de pales d'hélices et du cône avant.

Le placement des convertisseurs DC/AC, des convertisseurs DC/DC, des commutateurs de puissance et des transformateurs-tournants au sein de l'unité intégrée est adapté pour répondre aux contraintes de fiabilité et/ou de refroidissement. Par exemple, pour améliorer le refroidissement, on peut placer les composants plus sensibles à la température en contact des surfaces externes du carter de l'unité intégrée et proches de la grille d'aération d'air froid. Ou pour limiter le stress mécanique lié aux forces centrifuges, on peut placer certains composants de la partie tournante de l'unité intégrée au plus près de l'axe de rotation.

De plus, l'unité intégrée 320, 420, 520 peut comprendre une ou plusieurs soufflantes 341, 342, 441, 442, 541, 542 solidaires de la partie tournante 3201, 3202, 4201, 4202, 5201, 5202 de l'unité intégrée 320, 420, 520. Ces soufflantes 341, 342, 441, 442, 541, 542 soufflent de l'air forcé pour évacuer la chaleur de l'unité intégrée 320, 420, 520.

Des ailettes 551, 552 peuvent également être montées sur une surface externe et tournante de l'unité intégrée 520 (comme représenté en figure 5) pour accélérer l'air environnant et créer un débit d'air forcé permettant également d'évacuer la chaleur de l'unité intégrée 520, en particulier des éléments tournants 5201, 5202 de l'unité intégrée 520.

Il est également possible de placer des ailettes 561, 562 à l'intérieur de l'unité intégrée 520, de manière à ce que ces ailettes 561, 562 soient solidaires des parties fixes 5203, 5204 de l'unité intégrée 520. Ces trois solutions de refroidissement peuvent être réalisées seules ou en combinaison sur l'unité intégrée 520, afin de s'adapter à différentes contraintes : refroidissement, encombrement, masse, etc...

De plus, de manière avantageuse, les éléments placés dans les parties tournantes de l'unité intégrée présentée en figures 3, 4 et 5 sont assemblés et répartis de manière symétrique autour du réducteur de vitesse afin d'assurer l'équilibrage de l'ensemble et éviter de créer des balourds.

L'unité intégrée peut également avoir ses propres roulements, notamment du côté des flasques, si des contraintes d'intégration ou autres l'imposent.

Quel que soit le mode de réalisation de l'invention, l'unité intégrée comprend une pluralité de transformateurs-tournants, chaque transformateur étant associé à une paire de pales d'hélices distincte. S'il y a par exemple N paires de pales d'hélices (N étant supérieur ou égal à 1), il y aura N transformateurs-tournants dans chaque voie électrique de l'unité intégrée. Au sein d'une voie électrique, chaque transformateur-tournant est alimenté uniquement durant le temps d'activation de la paire de pales correspondante. Pour alimenter les transformateurs-tournants d'une même voie, l'unité intégrée peut comprendre un seul convertisseur DC/AC par voie (et le cas échéant également un seul convertisseur DC/DC) et le commutateur de puissance comprend des interrupteurs permettant d'activer le transformateur-tournant associé à la paire de pales active.

Au sein d'une même voie électrique, il est également possible de combiner le transformateur-tournant et le commutateur de puissance. Ainsi, le transformateur-tournant a autant de sorties que de paires de pales d'hélices à alimenter, et le commutateur combiné au transformateur-tournant agit comme un sélecteur pour sélectionner la sortie du transformateur-tournant correspondant à la paire de pales d'hélices active. Plus particulièrement, un actionneur électromagnétique est associé à un seul circuit primaire du transformateur-tournant et le sélecteur est commandé pour positionner l'actionneur, donc le circuit primaire du transformateur-tournant, avec le circuit secondaire du transformateur-tournant correspondant à la paire de pales active pendant la durée de dégivrage de cette paire de pales. Il y a toujours un seul convertisseur DC/AC par voie.

Quel que soit le mode de réalisation, le convertisseur DC/AC peut être monophasé, triphasé ou présenter une autre topologie.

Quel que soit le mode de réalisation, le transformateur-tournant peut être monophasé, triphasé ou présenter une autre topologie.

Quel que soit le mode de réalisation, le commutateur peut être en courant continu ou en courant alternatif.

## Revendications

1. Unité intégrée (220, 320, 420, 520) de transfert de puissance tournant d'un circuit électrique de dégivrage de pales (1101, 1102) d'hélice et de cône avant (110) d'une turbomachine comprenant :
- un transformateur-tournant (2221) comprenant une partie statique et une partie tournante ;
- un convertisseur (2231) de tension continue en tension alternative connecté à sa sortie à la partie statique du transformateur-tournant et destiné à être connecté à son entrée à une alimentation électrique continue (2321), et
- un commutateur (2211) de puissance connecté au transformateur-tournant et configuré pour transmettre une puissance électrique à au moins une paire (1101, 1102) de pales d'hélice et au cône avant (110) de la turbomachine,
**caractérisée en ce qu'**elle comprend au moins un convertisseur (2241, 2242) de tension continue en tension continue connecté à son entrée à l'alimentation électrique continue (2321, 2322) du convertisseur de tension continue en tension alternative (2231, 2232) et configuré pour générer une alimentation électrique basse tension.

2. Unité intégrée selon la revendication 1, comprenant une première voie électrique comprenant le transformateur-tournant (2221), le convertisseur (2231) et le commutateur (2211), et une deuxième voie comprenant un deuxième transformateur-tournant (2222) comprenant une partie statique et une partie tournante, un deuxième convertisseur (2232) de tension continue en tension alternative et un deuxième commutateur (2212) de puissance, le deuxième convertisseur étant connecté à sa sortie à la partie statique du deuxième transformateur-tournant et destiné à être connecté à son entrée à une alimentation électrique continue (2322) et le deuxième commutateur étant connecté au deuxième transformateur-tournant et configuré pour transmettre une puissance électrique à au moins une paire de pales (1101, 1102) d'hélice et au cône avant (110) de la turbomachine.

3. Unité intégrée selon la revendication 2, dans laquelle chaque voie électrique comprend un convertisseur (2241, 2242) de tension continue en tension continue connecté en entrée à l'alimentation électrique continue du convertisseur de tension continue en tension alternative (2231, 2232) de la voie électrique et configuré pour générer une alimentation électrique basse tension.

4. Unité intégrée selon l'une quelconque des revendications 2 ou 3, comprenant une pluralité de transformateurs-tournants dans chaque voie électrique, et au sein de chaque voie électrique, chaque transformateur-tournant est associé à une paire de pales d'hélice distincte, le convertisseur de tension continue en tension alternative est commun aux transformateurs-tournants de la voie électrique et le commutateur comprend des interrupteurs configurés pour sélectionner un des transformateurs-tournants de la voie électrique.

5. Unité intégrée selon l'une quelconque des revendications 2 ou 3, dans laquelle, dans chaque voie électrique, le transformateur-tournant et le commutateur de puissance sont combinés.

6. Turbomachine comprenant une unité intégrée de transfert de puissance tournant (320, 420, 520) selon l'une quelconque des revendications 1 à 5 et un réducteur de vitesse basse pression (330, 430, 530), l'unité intégrée étant solidaire du réducteur de vitesse basse pression.

7. Turbomachine selon la revendication 6, dans laquelle le réducteur de vitesse basse pression comprend une partie tournante et un arbre fixe (331, 431, 531), la partie tournante des transformateurs-tournants de l'unité intégrée est solidaire de la partie tournante du réducteur de vitesse basse pression, et la partie statique du ou des transformateurs-tournants, le ou les commutateurs de puissance et le ou les convertisseurs de tension continue en tension alternative de l'unité intégrée sont solidaires de l'arbre fixe du réducteur de vitesse basse pression.

8. Turbomachine selon la revendication 6, dans laquelle le réducteur de vitesse basse pression comprend une partie tournante et un arbre fixe, la partie tournante du ou des transformateurs-tournants et le ou les commutateurs de puissance de l'unité intégrée sont solidaires de la partie tournante du réducteur de vitesse basse pression et la partie statique des transformateurs-tournants et le ou les convertisseurs de tension continue en tension alternative de l'unité intégrée sont solidaires de l'arbre fixe du réducteur de vitesse basse pression.

9. Turbomachine selon l'une quelconque des revendications 6 à 8, comprenant des ailettes (551, 552) présentes sur une surface externe de l'unité intégrée (520) et solidaires de la partie tournante du réducteur de vitesse basse pression.

10. Turbomachine selon l'une quelconque des revendications 6 à 9, comprenant une soufflante (341, 342, 441, 442, 541, 542) solidaire de la partie tournante du réducteur de vitesse basse pression (330, 430, 530).

## Patentansprüche

1. Integrierte Einheit (220, 320, 420, 520) zur drehenden Leistungsübertragung von einer elektrischen Schaltung zum Enteisen von Propellerschaufeln (1101, 1102) und eines Vorderkegels (110) eines Turbinentriebwerks, umfassend:
- einen drehenden Transformator (2221), der einen statischen Teil und einen drehenden Teil umfasst;
- einen Gleich-/Wechselspannungswandler (2231), der an seinem Ausgang mit dem statischen Teil des drehenden Transformators verbunden ist und dazu bestimmt ist, an seinem Eingang mit einer Gleichstromversorgung (2321) verbunden zu sein, und
- einen Leistungsschalter (2211), der mit dem drehenden Transformator verbunden ist und dazu konfiguriert ist, eine elektrische Leistung an mindestens ein Paar (1101, 1102) von Propellerschaufeln und an den Vorderkegel (110) des Turbinentriebwerks zu übertragen,
**dadurch gekennzeichnet, dass** sie mindestens einen Gleich-/Gleichspannungswandler (2241, 2242) umfasst, der an seinem Eingang mit der elektrischen Gleichstromversorgung (2321, 2322) des Gleich-/Wechselspannungswandlers (2231, 2232) verbunden ist, und dazu konfiguriert ist, eine Niederspannungs-Stromversorgung zu generieren.

2. Integrierte Einheit nach Anspruch 1, umfassend eine erste elektrische Bahn, die den drehenden Transformator (2221), den Wandler (2231) und den Schalter (2211) umfasst, und eine zweite Bahn, die einen zweiten drehenden Transformator (2222), der einen statischen Teil und einen drehenden Teil umfasst, einen zweiten Gleich-/Wechselspannungswandler (2232) und einen zweiten Leistungsschalter (2212) umfasst, wobei der zweite Wandler an seinem Ausgang mit dem statischen Teil des zweiten drehenden Transformators verbunden ist und dazu bestimmt ist, an seinem Eingang mit einer Gleichstromversorgung (2322) verbunden zu sein, und wobei der zweite Schalter mit dem zweiten drehenden Transformator verbunden ist, und dazu konfiguriert ist, eine elektrische Leistung an mindestens ein Paar von Propellerschaufeln (1101, 1102) und an den Vorderkegel (110) des Turbinentriebwerks zu übertragen.

3. Integrierte Einheit nach Anspruch 2, wobei jede elektrische Bahn einen Gleich-/Gleichspannungswandler (2241), 2242) umfasst, der am Eingang mit der Gleichstromversorgung des Gleich-/Wechselspannungswandlers (2231, 2232) der elektrischen Bahn verbunden ist, und dazu konfiguriert ist, eine Niederspannungs-Stromversorgung zu generieren.

4. Integrierte Einheit nach einem der Ansprüche 2 oder 3, umfassend eine Vielzahl von drehenden Transformatoren in jeder elektrischen Bahn, und wobei innerhalb jeder elektrischen Bahn jeder drehende Transformator einem getrennten Paar von Propellerschaufeln zugeordnet ist, wobei der Gleich-/Wechselspannungswandler den drehenden Transformatoren der elektrischen Bahn gemeinsam ist, und der Schalter Stromunterbrecher umfasst, die dazu konfiguriert sind, einen der drehenden Transformatoren der elektrischen Bahn auszuwählen.

5. Integrierte Einheit nach einem der Ansprüche 2 oder 3, wobei in jeder elektrischen Bahn der drehende Transformator und der Leistungsschalter kombiniert sind.

6. Turbotriebwerk, umfassend eine integrierte Einheit zum drehenden Leistungsübertragung (320, 420, 520) nach einem der Ansprüche 1 bis 5 und ein Niederdruck-Untersetzungsgetriebe (330, 430, 530), wobei die integrierte Einheit mit dem Niederdruck-Untersetzungsgetriebe fest verbunden ist.

7. Turbotriebwerk nach Anspruch 6, wobei das Niederdruck-Untersetzungsgetriebe einen drehenden Teil und eine feststehende Welle (331, 431, 531) umfasst, wobei der drehende Teil der drehenden Transformatoren der integrierten Einheit mit dem drehenden Teil des Niederdruck-Untersetzungsgetriebes fest verbunden ist, und der statische Teil des oder der drehenden Transformatoren, der oder die Leistungsschalter und der oder die Gleich-/Wechselspannungswandler der integrierten Einheit mit der feststehenden Welle des Niederdruck-Untersetzungsgetriebes fest verbunden sind.

8. Turbotriebwerk nach Anspruch 6, wobei das Niederdruck-Untersetzungsgetriebe einen drehenden Teil und eine feststehende Welle umfasst, wobei der drehende Teil des oder der drehenden Transformatoren und der oder die Leistungsschalter der integrierten Einheit mit dem drehenden Teil des Niederdruck-Untersetzungsgetriebes fest verbunden sind, und der statische Teil der drehenden Transformatoren und der oder die Gleich-/Wechselspannungswandler der integrierten Einheit mit der feststehenden Welle des Niederdruck-Untersetzungsgetriebes fest verbunden sind.

9. Turbotriebwerk nach einem der Ansprüche 6 bis 8, umfassend Rippen (551, 552), die auf einer externen Oberfläche der integrierten Einheit (520) vorhanden sind und mit dem drehenden Teil des Niederdruck-Untersetzungsgetriebes fest verbunden sind.

10. Turbotriebwerk nach einem der Ansprüche 6 bis 9, umfassend ein Gebläse (341, 342, 441, 442, 541, 542), das mit dem drehenden Teil des Niederdruck-Untersetzungsgetriebes (330, 430, 530) fest verbunden ist.

## Claims

1. An integrated unit (220, 320, 420, 520) for transferring rotary power from an electrical circuit for de-icing the propeller blades (1101, 1102) and the nose (110) of a turbomachine comprising:
- a rotary transformer (2221) comprising a static part and a rotary part;
- a DC-to-AC voltage converter (2231) connected at its output to the static part of the rotary transformer and intended to be connected at its input to a DC electrical power supply (2321), and
- a power switch (2211) connected to the rotary transformer and configured to transmit electrical power to at least one pair (1101, 1102) of propeller blades and to the nose cone (110) of the turbomachine,
**characterized in that** it comprises a DC-to-DC voltage converter (2241, 2242) connected at its input to the DC electrical power supply (2321, 2322) of the DC-to-AC voltage converter (2231, 2232) and configured to generate a low-voltage electrical power supply.

2. The integrated unit as claimed in claim 1, comprising a first electrical channel comprising the rotary transformer (2221), the converter (2231) and the switch (2211), and a second channel comprising a second rotary transformer (2222) comprising a static part and a rotary part, a second DC-to-AC voltage converter (2232) and a second power switch (2212), the second converter being connected at its output to the static part of the second rotary transformer and intended to be connected at its input to a DC electrical power supply (2322) and the second switch being connected to the second rotary transformer and configured to transmit electrical power to at least one pair of propeller blades (1101, 1102) and to the nose cone (110) of the turbomachine.

3. The integrated unit as claimed in claim 2, wherein each electrical channel comprises a DC-to-DC voltage converter (2241, 2242) connected at its input to the DC electrical power supply of the DC-to-AC voltage converter (2231, 2232) of the electrical channel and configured to generate a low-voltage electrical power supply.

4. The integrated unit as claimed in any of claims 2 or 3, comprising a plurality of rotary transformers in each electrical channel, and within each electrical channel, each rotary transformer is associated with a separate pair of propeller blades; the DC-to-AC voltage converter is common to the rotary transformers of the electrical channel and the switch comprises switches configured to select one of the rotary transformers of the electrical channel.

5. The integrated unit as claimed in any of claims 2 or 3, wherein, in each electrical channel, the rotary transformer and the power switch are combined.

6. A turbomachine comprising an integrated unit (320, 420, 520) for transferring rotary power as claimed in any of claims 1 to 5 and a low-pressure reduction gear (330, 430, 530), the integrated unit being secured to the low-pressure reduction gear.

7. The turbomachine as claimed in claim 6, wherein the low-pressure reduction gear comprises a rotary part and a fixed shaft (331, 431, 531), the rotary part of each of the rotary transformers of the integrated unit is secured to the rotary part of the low-pressure reduction gear, and the static part of the rotary transformer or transformers, the power switch or switches and the DC-to-AC voltage converter or converters of the integrated unit are secured to the fixed shaft of the low-pressure reduction gear.

8. The turbomachine as claimed in claim 6, wherein the low-pressure reduction gear comprises a rotary part and a fixed shaft, the rotary part of the rotary transformer or transformers and the power switch or switches of the integrated unit are secured to the rotary part of the low-pressure reduction gear and the static part of each of the rotary transformers and the DC-to-AC voltage converter or converters of the integrated unit are secured to the fixed shaft of the low-pressure reduction gear.

9. The turbomachine as claimed in any of claims 6 to 8, comprising des fins (551, 552) located on an outer surface of the integrated unit (520) and secured to the rotary part of the low-pressure reduction gear.

10. The turbomachine as claimed in any of claims 6 to 9, comprising a fan (341, 342, 441, 442, 541, 542) secured to the rotary part of the low-pressure reduction gear (330, 430, 530).
